# EUROPÄISCHE PATENTANMELDUNG

(11) **EP 4 227 583 A2**
(43) Veröffentlichungstag der Anmeldung: **16.08.2023**
(21) Anmeldenummer: 23156624.1
(22) Anmeldetag: 14.02.2023
(51) Int. Cl.: F24D 3/10, F24D 19/10

(54) **VERFAHREN ZUM KÜHLEN ODER HEIZEN VON RÄUMEN**

(30) Priorität: 14.02.2022 AT 500972022
(71) Anmelder: Purmo Group Plc, 00121 Helsinki (FI)
(72) Erfinder: Struyf, Johan, 3090 Overijse (BE); Iivonen, Mikko, 00630 Helsiniki (FI)
(74) Vertreter: Wildhack & Jellinek

(57) **Zusammenfassung**

Die Erfindung betrifft ein Verfahren zum Kühlen oder Heizen von Räumen, wobei
- ein Heizmedium über eine Wärmequelle (1) temperiert und als temperiertes Heizmedium über zumindest eine Rohrleitung, insbesondere eine Vorlaufleitung (3), einer Mehrzahl von Verbrauchern (2) und/oder Verbrauchergruppen zugeführt wird, wobei Wärme vom Heizmedium in den Verbrauchern (2) und/oder den Verbrauchergruppen an eine Mehrzahl zu heizender Räume abgegeben oder von einer Mehrzahl zu kühlender Räume aufgenommen wird,
- wobei in jedem Raum zumindest ein Verbraucher (2) und/oder eine Verbrauchergruppe angeordnet ist,
- wobei eine Rohrleitung, insbesondere eine Rücklaufleitung (5), vorgesehen ist, in der das Heizmedium von den Verbrauchern (2) und/oder Verbrauchergruppen der Wärmequelle (1) wieder zugeführt wird,
- wobei in der Rohrleitung von der Wärmequelle (1) zum jeweiligen Verbraucher (2) und/oder zur jeweiligen Verbrauchergruppe ein Ventil (4) angeordnet ist, mit dem die Menge des Heizmediums, das von der Wärmequelle (1) zum jeweiligen Verbraucher (2) und/oder zur jeweiligen Verbrauchergruppe strömt, einstellbar ist,
wobei das von den Verbrauchern (2) und/oder Verbrauchergruppen zurückströmende Heizmedium in einer gemeinsamen Rücklaufsammelleitung (6) gesammelt und vermischt wird,
- wobei jedem Ventil (4) ein Anteil des vom Verbraucher (2) zur Wärmequelle (1) zurückströmenden Heizmediums aus der Rücklaufsammelleitung (6) zugeführt und mit dem von der Wärmequelle (1) zum Verbraucher (2) und/oder der Verbrauchergruppe strömenden Heizmedium vermischt wird, sodass die Temperatur des dem jeweiligen Verbraucher (2) und/oder der jeweiligen Verbrauchergruppe zugeführten Heizmediums vorgegeben und eingestellt wird.

## Beschreibung

Die Erfindung betrifft ein Verfahren zum Kühlen oder Heizen von Räumen gemäß dem Oberbegriff des Patentanspruchs 1, eine Anordnung zum Temperieren von Räumen gemäß dem Oberbegriff des Patentanspruchs 5, sowie ein Ventil zur Einstellung der Temperatur eines Heizmediums gemäß dem Oberbegriff des Patentanspruchs 10.

Ein geringer Wärmebedarf führt im Stand der Technik zu kleinen Durchflüssen des Heizungsmediums im Heizungsnetz. Die Steuerung der Heizleistung von Wärmeerzeugern durch Modulation des Wasserdurchflusses ist in der Praxis schwierig, insbesondere bei kleinen Wasserdurchflüssen.

Aus dem Stand der Technik sind eine Vielzahl von Vorrichtungen und Anordnungen bekannt, mit denen Räume temperiert, also gekühlt oder erwärmt werden können. Die aus dem Stand der Technik bekannten Verfahren und Vorrichtungen nutzen dabei stehts eine Wärmequelle, von der Wärme über Rohrleitungen an Verbraucher mittels eines Heizmediums transportiert wird und in den Verbrauchern dann an Räume oder zu heizende Objekte abgegeben wird. Ebenfalls bekannt ist es, dass derartige Wärmequellen auch umgekehrt Wärme aus den Räumen abführen, also diese kühlen können. Aus dem Stand der Technik bekannte Verbraucher können dabei beispielsweise Fußbodenheizungen, Heizkörper, Ventilatoren, Klimaanlagen oder andere aus dem Stand der Technik bekannte Verbraucher zum Heizen und Kühlen von Räumen sein.

Nachteil der aus dem Stand der Technik bekannten Vorrichtungen und Verfahren ist es allerdings, dass gerade in Neubauten oder kernsanierten Altbauten der Wärmebedarf deutlich geringer als in Altbauten bzw. aus dem Stand der Technik bekannten Vorrichtungen ist und diese Vorrichtungen daher oft ineffektiv arbeiten.

Während der jährliche Energieverbrauch von alten Wohngebäuden in der Regel in der Größenordnung von 200 kWh/m2 liegt, liegt er bei Neubauten und kernsanierten Altbauten in der Größenordnung von 50kWh/m2. Der Energieverbrauch in den verschiedenen europäischen Ländern ist aufgrund von Unterschieden in Klima, Gebäudestruktur und Nutzung unterschiedlich. Dementsprechend unterscheiden sich auch die Bemessungsheizlasten in den jeweiligen Ländern erheblich. Liegen die Heizlasten von Altbauten in der Größenordnung von 150-250 W/m2, so liegen die Heizlasten von neuen und umfassend renovierten Gebäuden in der Regel bei 15-50 W/m2.

In neuen und kernsanierten Altbauten spielen die freien Wärmegewinne eine bedeutende Rolle. Freie Wärme ist z.B. Sonneneinstrahlung durch Fenster, Wärme von Elektrogeräten und Wärmegewinne von Bewohnern und anderen Wohnungen und Räumen. Tatsächlich sind Neubauten und kernsanierte Altbauten thermisch wesentlich dynamischer und anspruchsvoller in Bezug auf die Regelbarkeit als Altbauten. Freie Wärmegewinne können mehr als die Hälfte des jährlichen Wärmebedarfs decken, und ihre Nutzung, Wärmeregulierung und Wärmerückgewinnung, ist ein Schlüsselfaktor für Energieeinsparungen und Energieeffizienz.

Aufgabe der vorliegenden Erfindung ist es daher, die Energieeffizienz in derartigen Heiz- und Kühlsystemen zu erhöhen und dabei einen einfachen Aufbau bereitzustellen und eine größtmögliche Energieeffizienz zu ermöglichen.

Diese Aufgabe wird bei einem Verfahren gemäß dem Oberbegriff des Patentanspruchs 1 durch die kennzeichnenden Merkmale gelöst. Erfindungsgemäß ist dabei vorgesehen, dass das von den Verbrauchern und/oder Verbrauchergruppen zurückströmende Heizmedium in einer gemeinsamen Rücklaufsammelleitung gesammelt und vermischt wird,
wobei jedem Ventil ein Anteil des vom Verbraucher zur Wärmequelle zurückströmenden Heizmediums aus der Rücklaufsammelleitung zugeführt und mit dem von der Wärmequelle zum Verbraucher und/oder der Verbrauchergruppe strömenden Heizmedium vermischt wird, sodass die Temperatur des dem jeweiligen Verbraucher und/oder der jeweiligen Verbrauchergruppe zugeführten Heizmediums vorgegeben und eingestellt wird.

Entscheidend für die Energieeffizienz einer Heizungsanlage ist eine möglichst niedrige Temperatur des Heizungswassers. Niedrige Wassertemperaturen, sowohl im Vorlauf als auch im Rücklauf, verbessern die Effizienz der Wärmeerzeugung, z. B. steigt die Leistungszahl der Wärmepumpe, die Kesselkondensation wird effizienter und die Rauchgaswäscher der Fernwärme arbeiten effizienter. Außerdem werden die Wärmeverluste aus dem Leitungsnetz und den Wärmeabgabestellen bzw Verbrauchern verringert.

Durch das erfindungsgemäße Verfahren ist es möglich, für jeden Verbraucher bzw. jede Verbrauchergruppe eine unterschiedliche Vorlauftemperatur einzustellen. Durch die Einstellung der Vorlauftemperatur und der Rückführung des Rücklaufs in eine gemeinsame Rücklaufsammelleitung kann die erzeugte Wärme von der Wärmequelle bzw. die Temperatur des Vorlaufs reduziert werden und an den Verbraucher mit dem höchsten Wärmebedarf angepasst werden. Die Anpassung der Wassertemperatur an den Wärmebedarf führt zu einem wesentlich genaueren Regelungsergebnis. Gleichzeitig ist es nicht notwendig, in die Wasserströme einzugreifen.

Die Modulierung der Heizwassertemperaturen entsprechend dem tatsächlichen Wärmebedarf in den Räumen führt zu niedrigeren Wassertemperaturen. Das Gebäude selbst kann z. B. in zwei oder mehr Regelkreise unterteilt werden, z. B. in nach Süden und Norden ausgerichtete Räume. Eine solche Aufteilung ist z. B. im Frühjahr und Winter sinnvoll, wenn die Sonne die südlichen Wände erwärmt und der Heizbedarf deutlich sinkt. Gleichzeitig benötigen die Räume auf der Nordseite deutlich mehr Heizwärme. In Ermangelung einer solchen Aufteilung wird die Vorlauftemperatur entsprechend dem maximalen Energiebedarf geregelt, was zu einem On-Off-Betrieb des Thermostats und einer Schwankung der Innentemperaturen in den nach Süden ausgerichteten Räumen führt. Dies erhöht den Energieverbrauch des Gebäudes. Die bedarfsgerechte Regelung der Wassertemperatur der südlichen Heizkreise nach dem erfindungsgemäßen Verfahren vermeidet eine erhöhte Schwankung und eine mögliche Überhitzung der Räume.

Dementsprechend kann die Wassertemperatur pro Einheit, d.h. pro Raum, nach dem erfindungsgemäßen Verfahren moduliert werden, was die Kontrolle der Innentemperaturen verbessert und die Energieeffizienz des gesamten Gebäudeheizungssystems optimiert.

Soll ein Raum bzw. Objekt gekühlt werden, kann im umgekehrten Sinne die Temperatur des Heizmediums an den Verbraucher bzw. Raum mit dem größten Bedarf an Wärmeabfuhr angepasst werden und daher die Anlage bzw. die Temperatur des Heizmediums optimal genutzt werden und derart die Energieeffizienz bei der Erzeugung bzw. Abfuhr der Wärme erhöht werden.

Durch die Vermischung des Rücklaufs mit dem Vorlauf wird die Temperatur des Heizmediums im Ventil besonders einfach eingestellt. So kann beispielsweise in dem Ventil, das zu dem Verbraucher mit dem größten Heizwärmebedarf führt, die Beimengung des Rücklaufs Null sein und derart die Temperatur des Heizmediums, das direkt von der Wärmequelle strömt, ohne Veränderung geleitet werden. Bei Verbrauchern bzw. Verbrauchergruppen mit geringerem Heizwärmebedarf wird dann ein Anteil des Rücklaufs dem Vorlauf beigemischt, die Temperatur abgesenkt und so der für diesen Verbraucher optimalen Wärmebedarf eingestellt werden.

Unter "temperieren von Räumen" ist im Zusammenhang mit der Erfindung zu verstehen, dass die Räume sowohl geheizt als auch gekühlt werden können, also aus den Räumen Wärme abgeführt und/oder diesen zugeführt werden kann. Als Wärmequelle ist im Zusammenhang mit der vorliegenden Erfindung nicht einschränkend eine reine Heizquelle, in der Wärme erzeugt und an das Heizmedium abgegeben wird zu verstehen, sondern auch eine Wärmesenke, in der Wärme dem Heizmedium entzogen und die Temperatur des Heizmediums abgesenkt wird. In modernen Gebäuden kann eine Wärmequelle beispielsweise als Wärmepumpe ausgebildet sein, mit der sowohl Heiz- als auch Kühlfunktionen in einem Gerät realisiert werden können. Alternativ kann auch die Wärmequelle jeweils nur eine Heizquelle oder eine Wärmesenke, wie beispielsweise bei Klimaanlage, oder andere, aus dem Stand der Technik bekannte Wärmequellen und -senken sein.

Vorteile des erfindungsgemäßen Verfahrens ergeben sich durch die abhängigen Ansprüche:
Um die Temperatur des zu den einzelnen Verbrauchern bzw. Räumen strömenden Heizmediums besonders effektiv an die dortigen Gegebenheiten und den Wärme- bzw. Kühlbedarf anpassen zu können, kann vorgesehen sein, dass in den zu heizenden oder zu kühlenden Räumen jeweils zumindest ein Sensor, insbesondere ein Thermostat, angeordnet ist, mit dem der Wärmebedarf des Verbrauchers und/oder der Verbrauchergruppe und/oder des Raumes ermittelt wird, und wobei die Temperatur des aus dem jeweiligen Ventil dem Verbraucher und oder der Verbrauchergruppe zugeführten Heizmediums anhand des Wärmebedarfs des jeweiligen Verbrauchers und/oder der Verbrauchergruppe und/oder des Raums eingestellt wird. Durch die Sensoren kann derart der Wärmebedarf der einzelnen Räume ermittelt, dieser den Ventilen über die Steuereinheit zugeführt und derart die Temperatur des Heizmediums, das zu den Verbrauchern bzw. Verbrauchergruppen strömt, über die Ventile besonders effektiv eingestellt werden.

Zur Regulierung der Temperatur bzw. des Wärmebedarfs innerhalb der Räume kann vorteilhaft vorgesehen sein, dass der Wärmebedarf des Verbrauchers und/oder der Verbrauchergruppe des zu heizenden oder zu kühlenden Raumes unter Heranziehung von Umgebungsdaten, der Außentemperatur, der Sonneneinstrahlung und/oder einer Wetterprognose ermittelt wird, wobei zur Ermittlung des Wärmebedarfs insbesondere eine künstliche Intelligenz oder ein Machine-Learning herangezogen wird. Durch Berücksichtigung der Umgebungsdaten, Außentemperatur, der Sonneneinstrahlung und/oder anderer Umgebungsparameter der einzelnen Räume bzw. Gebäude kann der Wärmebedarf der einzelnen Räume bzw. Gebäude besonders effektiv eingestellt werden und das Verfahren besonders energieschonend durchgeführt werden.

Besonders energieschonend kann das Verfahren durchgeführt werden, indem die Temperatur des Heizmediums in der Wärmequelle anhand der höchsten oder niedrigsten benötigten Temperatur angepasst wird, die in dem Verbraucher und/oder der Verbrauchergruppe mit dem größten Wärmebedarf oder größten Kühlbedarf benötigt wird.

Ein weiterer Aspekt der vorliegenden Erfindung sieht vor, eine Anordnung zum Temperieren - also Heizen und Kühlen - von Räumen bereitzustellen, die es besonders einfach und energieschonend möglich macht, die Temperatur von Räumen zu regeln.

Bei einer Anordnung gemäß dem Oberbegriff des Patentanspruchs 5 wird diese Aufgabe mit den kennzeichnenden Merkmalen gelöst. Erfindungsgemäß ist dabei vorgesehen, dass die Anordnung eine Rücklaufsammelleitung aufweist in der alle Rohrleitungen, insbesondere alle Rücklaufleitungen die von den Verbrauchern und/oder Verbrauchergruppen zur Wärmequelle zurückführen münden und das zurückströmende Heizmedium in der gemeinsamen Rücklaufsammelleitung sammelbar und untereinander vermischbar ist, wobei jedes Ventil einen Rücklaufeingang aufweist, wobei der Rücklaufeingang mit der Rücklaufsammelleitung fluidübertragend verbunden ist,
und dass jedes Ventil eine Mischkammer aufweist, wobei die Mischkammer derart mit dem Vorlaufanschluss und dem Rücklaufeingang fluidübertragend verbunden ist, wobei das von der Wärmequelle strömende Heizmedium, insbesondere der Vorlauf, mit dem über den Rücklaufeingang in das Ventil eintretende Heizmedium, insbesondere dem Rücklauf, mischbar ist und über den Verbraucherausgang dem jeweiligen Verbraucher und/oder der jeweiligen Verbrauchergruppe zuführbar ist.

Wie bereits zu dem erfindungsgemäßen Verfahren erläutert, kann durch den Anschluss der Rückläufe von den Verbrauchern bzw. Verbrauchergruppen in einer gemeinsamen Rücklaufsammelleitung unter Vermischung mit dem warmen bzw. kühlen Heizmedium, das von der Wärmequelle heranströmt, die Temperatur des Heizmediums, das zu den Verbrauchern bzw. Verbrauchergruppen führt, besonders effektiv eingestellt werden. Weiters ist so auch die Menge an Heizmedium, die von der Wärmequelle zur Verfügung gestellt werden muss, geringer und daher auch die Pumpleistung durch die Wärmequelle selbst hindurch und damit der Energieaufwand reduziert.

Wie bereits zum Verfahren, wird im Zusammenhang mit der erfindungsgemäßen Anordnung "temperieren" als heizen und/oder kühlen verstanden. Auch zur Anordnung wird die Wärmequelle als eine dem Heizmedium Wärme zuführende Quelle oder als sogenannte Wärmesenke verstanden, die dem Heizmedium und damit den Räumen Wärme entzieht.

Eine bevorzugte Ausbildung der Anordnung kann erreicht werden, indem jede Mischkammer zumindest eine Rücklaufeintrittsöffnung aufweist, über die das Heizmedium aus der Rücklaufsammelleitung in die Mischkammer einleitbar ist,
und/oder wobei die Mischkammer zumindest eine Vorlauföffnung aufweist, die mit dem Vorlaufanschluss des Ventils fluidübertragend verbunden ist und über die das Heizmedium, insbesondere der Vorlauf, in die Mischkammer einleitbar ist,
und dass der Querschnitt der Rücklaufeintrittsöffnung und/oder der Vorlauföffnung über ein Regelmittel gekoppelt und/oder unabhängig voneinander einstellbar ausgebildet ist, sodass die Temperatur des über den Verbraucherausgang des Ventils zum jeweiligen Verbraucher und/oder Verbrauchergruppe strömenden Heizmediums einstellbar ist. Durch die Ausbildung der Mischkammer kann der in der Rücklaufsammelleitung strömende Rücklauf besonders effektiv und einfach dem Vorlauf bzw. dem von der Wärmequelle strömenden Heizmedium beigemischt und derart die Temperatur des über den Verbraucherausgang strömenden Heizmediums besonders effektiv eingestellt werden.

Um die Temperatur des Heizmediums besonders effektiv einstellen zu können, kann vorgesehen sein, dass die Anordnung zumindest einen Sensor, insbesondere einen Thermostat, je zu heizendem Raum aufweist, mit dem der Wärmebedarf des jeweiligen zu beheizenden Raumes ermittelbar ist, - wobei die Anordnung eine Steuereinheit aufweist, wobei die Steuereinheit derart ausgebildet ist, dass die Messwerte der Sensoren der Steuereinheit zuführbar sind, und wobei die Temperatur des jedem Verbraucher und/oder jeder Verbrauchergruppe zugeführten Heizmediums individuell über das dem jeweiligen Verbraucher und/oder jeweiligen Verbrauchergruppe zugeordnete Ventils einstellbar ist.

Da es beim Strömen des Heizmediums zu den Verbrauchern und wieder retour zu einem Druckverlust kommen kann, kann vorgesehen sein, dass dieser Druckverlust vorteilhaft ausgeglichen wird, indem zwischen der Rücklaufsammelleitung und dem Ventil eine Pumpe angeordnet ist, die den Druck des Heizmediums in der von den Verbrauchern und/oder den Verbrauchergruppen in die Rücklaufsammelleitung führenden Rohrleitungen auf den Druck des von der Wärmequelle strömenden Heizmediums anhebt.

Um eine besonders kompakte Bauweise der Anordnung erreichen zu können, kann vorgesehen sein, dass die Ventile der einzelnen Verbraucher und/oder Verbrauchergruppen in einem Mehrfachventil vereint sind.

Ein weiterer Aspekt der vorliegenden Erfindung ist es, ein Ventil zur Einstellung der Temperatur eines Heizmediums bereitzustellen. Diese Aufgabe wird bei einem Ventil gemäß dem Oberbegriff des Patentanspruchs 10 durch die kennzeichnenden Merkmale gelöst. Erfindungsgemäß ist dabei vorgesehen, dass das Ventil eine Mischkammer aufweist, wobei die Mischkammer derart mit dem Vorlaufanschluss und dem Rücklaufeingang fluidübertragend verbunden ist, dass das in den Vorlaufanschluss einströmende Heizmedium, insbesondere der Vorlauf, mit dem über den Rücklaufeingang in das Ventil eintretende Heizmedium, insbesondere dem Rücklauf, mischbar ist und über den Verbraucherausgang dem jeweiligen Verbraucher und/oder der jeweiligen Verbrauchergruppe zuführbar ist.
Durch die erfindungsgemäße Ausbildung des Ventils wird ein besonders effektiver und kompakter Aufbau des Ventils erreicht und dabei die Mischung des Rücklaufs bzw. von Teilen des Rücklaufs mit dem von der Wärmequelle strömenden Vorlauf einfach realisiert.

Die Temperatur des Heizmediums im Ventil kann besonders einfach eingestellt werden, indem die Mischkammer zumindest eine Rücklaufeintrittsöffnung aufweist, die mit dem Rücklaufeingang fluidübertragend verbunden ist,
wobei die Mischkammer zumindest eine Vorlauföffnung aufweist, die mit dem Vorlaufanschluss des Ventils fluidübertragend verbunden ist,
und dass der Querschnitt der Rücklaufeintrittsöffnung und/oder der Vorlauföffnung über ein Regelmittel gekoppelt und/oder unabhängig voneinander einstellbar ausgebildet ist, sodass die Temperatur des über den Verbraucherausgang des Ventils zum jeweiligen Verbraucher und/oder Verbrauchergruppe strömenden Heizmediums einstellbar ist

Eine vorteilhafte Ausbildung des Ventils wird bereitgestellt, indem die Mischkammer zylindrisch ausgebildet ist, wobei das Regelmittel als Stellhülse ausgebildet ist, die in der Mischkammer an deren Innenumfang anliegend verstellbar angeordnet und ausgebildet ist, wobei die Stellhülse die Rücklaufeintrittsöffnung und/oder der Vorlauföffnung zumindest teilweise abdeckt, wobei die Stellhülse zumindest zwei Öffnungen aufweist, wobei die Öffnungen derart im Umfang der Stellhülse im Bereich der die Rücklaufeintrittsöffnung und/oder der Vorlauföffnung der Mischkammer angeordnet sind, dass bei Verstellung der Stellhülse in der Mischkammer , insbesondere in der Achse der Mischkammer , die Überdeckung der Öffnungen mit der Rücklaufeintrittsöffnung und/oder der Vorlauföffnung der Mischkammer veränderbar ist, sodass die Menge des aus der Rücklaufeintrittsöffnung und/oder der Vorlauföffnung in die Mischkammer eintretende Heizmedium veränderbar ist.

Um ein Ventil für mehrere Verbraucher oder Verbrauchergruppen bzw. zu heizende oder zu kühlende Räume bereitzustellen, kann vorgesehen sein, dass das Ventil eine Mehrzahl von Mischkammern umfasst, wobei je Mischkammer ein Verbraucherausgang vorgesehen ist sodass die Temperatur des aus dem Verbraucherausgang einem diesen nachgeordneten Verbraucher oder Verbrauchergruppe einstellbar ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

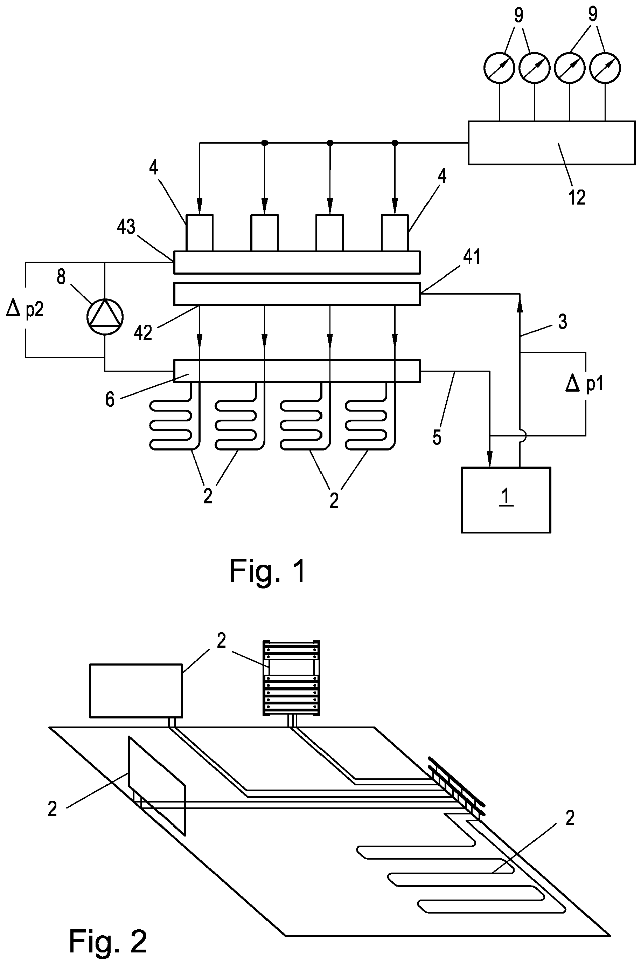

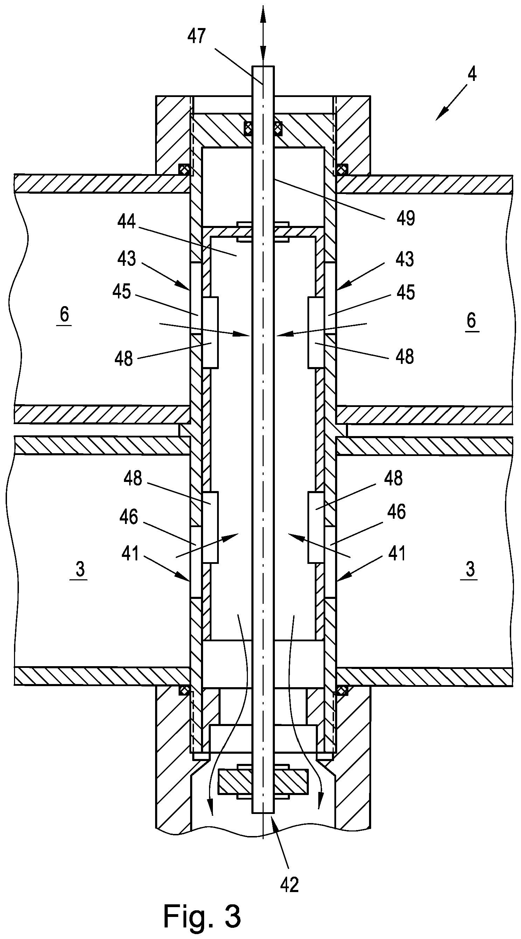

Fig. 1 zeigt eine schematische Darstellung des Funktionsprinzips der erfindungsgemäßen Anordnung, Fig. 2 zeigt eine schematische Anordnung von unterschiedlichen Arten von Verbrauchern und Fig. 3 zeigt eine bevorzugte Ausführungsform eines erfindungsgemäßen Ventils in Schnittansicht.

In Fig. 1 ist eine erste bevorzugte Ausführungsform der erfindungsgemäßen Anordnung zum Temperieren von Räumen schematisch abgebildet. Die Anordnung umfasst eine Wärmequelle 1, beispielsweise eine Wärmepumpe, in der ein Heizmedium erwärmt oder abgekühlt wird. Die Anordnung umfasst weiters eine Mehrzahl von Verbrauchern 2, wie beispielsweise in Fig. 2 dargestellt. Die Wärmequelle 1 ist mit den Verbrauchern 2 über eine Anzahl von Rohrleitungen verbunden. Von der Wärmequelle 1 führt die sogenannte Vorlaufleitung 3 zu den Verbrauchern 2 und die sogenannte Rücklaufleitung 5 von den Verbrauchern 2 wieder zurück zur Wärmequelle 1. Zwischen der Wärmequelle 1 und den Verbrauchern 2 ist in der Vorlaufleitung 3 eine Anzahl von - bei dieser Ausführungsform vier - Ventilen 4 angeordnet, mit denen jeweils der Durchfluss zu je einem Verbraucher 2 geregelt wird. Das von der Wärmequelle 1 in der Vorlaufleitung 3 zu den Verbrauchern 2 strömende Heizmedium wird auch als Vorlauf bezeichnet und das von den Verbrauchern 2 zur Wärmequelle 1 zurückströmende Heizmedium als Rücklauf.

Die von den Verbrauchern 2 zurück zur Wärmequelle 1 führenden Rohrleitungen, also die Rücklaufleitungen 5, werden in einer gemeinsamen Rücklaufsammelleitung 6 gebündelt, worin der Rücklauf, der von den Verbrauchern 2 an deren Ausgang austritt, gesammelt und vermischt wird. Von der Rücklaufsammelleitung 6 wird dann über eine Pumpe 8, die die Druckdifferenz Δp2 zwischen dem Vorlauf und dem Rücklauf kompensiert, der Rücklauf den Ventilen 4 wieder zugeführt. In den Ventilen 4 wird sodann ein Teil des in der Rücklaufsammelleitung 6 vorliegenden Rücklaufs bzw. des darin befindliche Heizmediums mit dem von der Wärmequelle 1 kommenden Vorlauf vermischt und damit die Temperatur für den jeweiligen Verbraucher 2 vorgegeben bzw. eingestellt. Über die Menge des aus der Rücklaufsammelleitung 6 strömenden Rücklaufs, der mit dem Vorlauf im Ventil 4 vermischt wird, kann die Temperatur des zu den Verbrauchern 2 aus dem Ventil 4 strömenden Vorlaufs eingestellt werden. Wird also die Menge des aus der Rücklaufsammelleitung 6 strömenden Rücklaufs in Relation zum Vorlauf in dem Ventil vergrößert, wird beispielsweise die Temperatur des aus dem Ventil bzw. dessen Verbraucherausgang 42 ausströmenden Heizmediums reduziert.

Die Verbraucher 2 können jeweils als einzelne Verbraucher, beispielsweise als Fußbodenheizung in einzelnen Räumen, angeordnet sein, in denen diese Wärme an den Raum abgeben bzw. von diesem aufnehmen. Alternativ können auch mehrere Verbraucher, beispielsweise Heizkörper oder Fußbodenheizungsleitungen, in den einzelnen Räumen vorliegen, sodass diese als Verbrauchergruppe zusammengefasst sind.

Bei der in Fig. 1 dargestellten bevorzugten Ausführungsform der erfindungsgemäßen Anordnung ist je Verbraucher 2, alternativ auch Verbrauchergruppe, ein Ventil 4 vorgesehen, sodass für jeden einzelnen Verbraucher 2 die Temperatur des Heizmediums über das Ventil 4 selbst eingestellt werden kann. Die Ventile 4 weisen zur Mischung des Rücklaufs mit dem Vorlauf jeweils einen Vorlaufanschluss 41 auf, an dem der Vorlauf bzw. das von der Wärmequelle 1 strömende Heizmedium in das Ventil 4 einströmen kann. Weiters weist jedes Ventil 4 einen Rücklaufeingang 43 auf, an dem der Rücklauf, der aus der Rücklaufsammelleitung 6 strömt, in das Ventil 4 eintritt. Das Ventil 4 bzw. jedes Ventil 4 weist weiters eine Mischkammer 44 auf, in dem der Vorlauf und der aus der Rücklaufsammelleitung 6 strömende Rücklauf vermischt wird. Aus dem Verbraucherausgang 42 strömt dann, wie zuvor beschrieben, der mit einem Anteil des Rücklaufs vermischte Vorlauf den einzelnen Verbrauchern 2 bzw. den jeweiligen Verbrauchergruppen zu.

Wie in Fig. 1 dargestellt, kann die Anordnung optional eine Anzahl von Sensoren - bei dieser Ausführungsform Thermostate 9 - aufweisen, die die jeweilige Temperatur der zu heizenden oder zu kühlenden Räume erfassen. Die Messwerte der einzelnen Sensoren bzw. Thermostate 9 werden dann einer Steuereinheit 12 zugeführt, in der diese dann weiterverarbeitet werden. In der Steuereinheit 12 wird beispielsweise dann die Temperatur des Raums mit einer Soll-Temperatur verglichen und dann gegebenenfalls ein Stellbefehl an das Ventil 4 weitergegeben. Ist also beispielsweise die Temperatur des Raums zu gering, wird der Durchfluss des aus dem Verbraucherausgang 42 des Ventils 4 austretenden Heizmediums freigegeben sodass Heizmedium zu dem Verbraucher 2 strömt. Durch die Einstellung der Temperatur des Heizmediums wird derart eine größere Wärmemenge über den Durchfluss dem jeweiligen Verbraucher 2 oder der Verbrauchergruppe zugeführt. In dem Raum wird sodann Wärme über den Verbraucher 2 an den Raum abgegeben und dieser aufgeheizt. Von dem jeweiligen Verbraucher 2 strömt der Rücklauf in die Rücklaufsammelleitung 6 ein und wird mit dem Rücklauf der weiteren Verbraucher 2 bzw Verbrauchergruppen vermischt. Über die Rücklaufsammelleitung 6 tritt dann ein Anteil des vermischten Rücklaufs in die Mischkammer 44 der Ventile 4 ein und wird dort erneut mit dem Vorlauf vermischt und derart die Temperatur des Heizmediums, das aus dem Verbraucherausgang 42 dem Verbraucher 2 wieder zugeführt wird, eingestellt. Optional kann vorgesehen sein, dass über die Steuereinheit 12 die für den jeweiligen Raum oder das zu heizende Objekt benötigte Wärmemenge ermittelt und derart die Menge des in die Mischkammer 44 eintretenden Rücklaufs an die benötigte Wärmemenge angepasst wird. Durch diese Verstellung wird bevorzugt ermöglicht, dass stets der gleiche Durchfluss zu den einzelnen Verbrauchern 2 über die Ventile 4 geführt werden kann und daher der Druckunterschied zwischen dem Vorlauf und dem Rücklauf konstant gehalten wird. So kann bei gleichbleibendem Differenzdruck Δp1 zwischen der Vorlaufleitung 3 und der Rücklaufleitung 5 die an den Raum abzuführende Wärme verändert werden und somit die Anordnung besonders effektiv betrieben werden. Der Differenzdruck Δp1 kann optional durch einen in die Anordnung integrierten Differenzdruckregler geregelt und eingestellt werden.

Die für den einzelnen Verbraucher 2 bzw. die einzelnen Verbrauchergruppen benötigte Wärmemenge kann dabei, beispielsweise über die Steuereinheit 12, ermittelt werden, indem die Temperatur des Raums sowie die Größe der einzelnen Verbraucher 2 berücksichtigt werden. Optional kann zur Ermittlung des benötigten Wärmebedarfs der jeweiligen Verbraucher 2 und/oder der Verbrauchergruppen des zu heizenden oder zu kühlenden Raums die Umgebungsdaten des Raums, beispielsweise die Außentemperatur, die Sonneneinstrahlung und/oder eine Wetterprognose, herangezogen werden. Die Ermittlung des Wärmebedarfs kann dabei optional über eine künstliche Intelligenz oder Machine-Learning ermittelt bzw. bestimmt werden.

Durch die erfindungsgemäße Anordnung und das erfindungsgemäße Verfahren kann sodann die Temperatur des Heizmediums, das in der Wärmequelle 1 beispielsweise aufgeheizt oder abgekühlt wird, angepasst werden, also beispielsweise auf die höchstbenötigte Temperatur zum Heizen abgesenkt werden. So kann beispielsweise über die Steuereinheit 12 der größte Wärmebedarf eines Verbrauchers 2 ermittelt werden und die Temperatur des Heizmediums im Ausgang der Wärmequelle 1 soweit abgesenkt werden, dass die Wärmemenge desjenigen Verbrauchers 2 mit dem größten Wärmebedarf bedient werden kann und der Wärmebedarf der anderen Verbraucher durch Zumischung des über die Rücklaufsammelleitung 6 zurückströmenden Rücklaufs in den Ventilen 4 eingestellt werden. Über die derart ermöglichte Absenkung der Temperatur des Vorlaufs ist es möglich, insbesondere in modernen Anlagen, beispielsweise mittels Wärmepumpen, besonders effizient und energiesparend Räume zu temperieren, da je geringer die Temperatur des Vorlaufs ist die Benötigte Energiemenge sinkt.

Wie in Fig. 1 dargestellt, können die Ventile 4 zu einer Ventilgruppe zusammengefasst sein, die dann über eine Vorlaufleitung 3 und jeweils eine Rücklaufleitung bzw. Rücklaufsammelleitung 6 versorgt werden.

In Fig. 3 ist eine bevorzugte Ausführungsform eines erfindungsgemäßen Ventils 4 in einer Schnittansicht schematisch dargestellt. Das Ventil 4 zur Einstellung der Temperatur des Heizmediums weist einen Vorlaufanschluss 41 auf, durch den der Vorlauf 3 in das Ventil 4 eintritt. Weiters weist das Ventil 4 einen Rücklaufeingang 43 auf, in den der in der Rücklaufleitung bzw. Rücklaufsammelleitung 6 gesammelte Rücklauf strömt. Das in Fig. 3 dargestellte bevorzugte Ventil 4 weist zwei Rücklaufeinströmöffnungen 45 auf, über die der Rücklauf aus der Rücklaufsammelleitung 6 in die zylindrisch ausgebildete Mischkammer 44 eintritt. Die Mischkammer 44 weist weiters zwei Vorlauföffnungen 46 auf, über die der in der Vorlaufleitung 3 strömende Vorlauf in die Mischkammer eintritt. In der Mischkammer 44 ist ein Regelmittel, mit dem der Durchfluss des Rücklaufs aus der Rücklaufsammelleitung 6 und des Vorlaufs aus der Vorlaufleitung 3 in die Mischkammer 44 verstellt werden kann, angeordnet. Das Regelmittel ist bei dieser Ausführungsform als Stellhülse 13 ausgebildet, die ebenfalls zylindrisch ist und mit ihrem Außenumfang am Innenumfang der Mischkammer 44 anliegt. Die Stellhülse 13 ist entlang der Achse 47 der Mischkammer 44 verstellbar, kann also entlang der Achse 47 in der Mischkammer 44 angehoben oder abgesenkt werden. Die Stellhülse 13 weist vier Öffnungen 48 auf, die an dem Umfang der Stellhülse 13 angeordnet sind. Die Öffnungen 48 der Stellhülse 13 sind dabei so angeordnet, dass jeweils zwei Öffnungen 48 im Bereich der beiden Rücklaufeintrittsöffnungen 45 und zwei Öffnungen 48 im Bereich der Vorlauföffnungen 46 angeordnet sind. Die Stellhülse 13 überdeckt teilweise mit ihrem Umfang die Vorlauföffnungen 46 und die Rücklaufeintrittsöffnungen 45, sodass die jeweils im Bereich der Rücklaufeintrittsöffnungen 45 und der Vorlauföffnungen 46 angeordneten Öffnungen 48 das Einströmen des Vorlaufs an den Vorlauföffnungen 46 und des Rücklaufs aus der Rücklaufsammelleitung 6 an den Rücklaufeintrittsöffnungen 45 erlaubt. Wird die Stellhülse 13 verstellt, wird die Überdeckung der Öffnungen 48 mit der den Vorlauföffnungen 46 und den Rücklaufeintrittsöffnungen 45 verändert, sodass entweder mehr Rücklauf oder mehr Vorlauf in die Mischkammer 44 eintritt. Durch Verstellung der Stellhülse 13 kann also die Menge des in die Mischkammer 44 eintretenden Vorlaufs vergrößert oder verkleinert werden, sowie die Menge des in die Mischkammer 44 eintretenden Rücklaufs vergrößert oder ebenfalls verkleinert werden. So wird beispielsweise bei Anheben der Stellhülse 13 die Überdeckung der Öffnungen 48 mit den Rücklaufeintrittsöffnungen 45 vergrößert und die Überdeckung der Öffnungen 48 mit den Vorlauföffnungen 46 verkleinert. So tritt also mehr Rücklauf aus der Rücklaufsammelleitung 6 und weniger Vorlauf aus der Vorlaufleitung 3 in die Mischkammer 44 ein. Dies bewirkt beispielsweise eine Absenkung der Temperatur des Heizmediums, das dann aus dem Verbraucherausgang 42 den jeweiligen Verbrauchern 2 oder Verbrauchergruppen zugeführt wird.

Bei der in der Fig. 3 dargestellten bevorzugten Ausführungsform des Ventils 4 ist die Stellhülse 13 mit dem Stellmittel 49, das die Menge des Durchflusses an den Verbraucher 2 einstellt, verbunden. Alternativ kann das Regelmittel bzw. die Stellhülse 13 auch unabhängig von den durchflussregelnden Elementen gehalten bzw. verstellt werden. So kann beispielsweise der Durchfluss des Heizmediums durch ein der Stellhülse 13 nachgestelltes Ventil geregelt werden. Alternativ können diese beiden Elemente in einem Bauteil auch vereint sein. So kann optional zb die Stellhülse 13 bzw das Stellmittel selbst den Durchfluss zu den Verbrauchern 2 bzw den Verbrauchergruppen regeln. Beispielsweise kann durch Verdrehung der Stellhülse 13 in ihrer Achse die Überdeckung der Öffnungen 48 mit den Vorlauföffnungen 46 und den Rücklaufeintrittsöffnungen 45 und dennoch das Mischungsverhältnis des Vorlaufs mit dem Rücklauf in der Mischkammer 44 konstant gehalten werden und so der Durchfluss des Heizmediums durch das Ventil 4 verändert werden.

Wie in Fig. 3 dargestellt, könnten beispielsweise an den Rohrleitungen, also an der Rücklaufsammelleitung 6 und der Vorlaufleitung 3, mehrere Mischkammern 44 angeordnet sein und derart mehrere Ventile 4 kompakt aneinander gereiht durch ein einziges Gruppenventil oder Ventil 4 ausgebildet werden.

Alternativ zu den in den Fig. 1 bis 3 beschriebenen Ausführungsformen der möglichen Heizung eines Raums kann ebenfalls nach dem gleichen Arbeitsprinzip bzw. dem erfindungsgemäßen Verfahren eine Kühlung der Räume vorgenommen werden. So wird dann kaltes Heizmedium über die Vorlaufleitung 3 in die Ventile 4 einströmen und von den Ventilen 4 an die Verbraucher 2 strömen. Das derart kalte Heizmedium kann dann Wärme über die Verbraucher 2 aufnehmen und als warmes Heizmedium in der Rücklaufsammelleitung 6 gesammelt werden. Wie bereits zuvor beschrieben, kann sodann über die Rücklaufsammelleitung 6 der wärmere Rücklauf in die Mischkammer 44 eintreten und mit dem kalten Vorlauf vermischt und derart die Temperatur für die jeweiligen Verbrauche eingestellt werden.

In den Fig. 1 bis 3 würde sodann der in der Rücklaufsammelleitung 6 strömende Rücklauf, der nicht in die Mischkammer 44 bzw. in die Ventile 4 eintritt, der Wärmequelle 1 wieder zugeführt und dort beispielsweise erneut erwärmt oder abgekühlt werden.

Im Folgenden wird anhand der bevorzugten Ausführungsform der erfindungsgemäßen Anordnung eine bevorzugten Ausführungsform des Verfahrens beschrieben:
In der Wärmequelle 1 wird ein Heizmedium erwärmt und tritt als Vorlauf über die Vorlaufleitung 3 aus der Wärmequelle 1 aus. Der Vorlauf wird dann in der Vorlaufleitung 3 zu den Ventilen 4 befördert und in der Mischkammer 44 der Ventile 4 mit einem Anteil des aus der Rücklaufsammelleitung 6 austretenden Rücklaufs 6 vermischt. Die Steuereinheit 12 ermittelt über die Thermostate 9 den jeweiligen Heizbedarf der einzelnen zu heizenden Räume und stellt dementsprechend die Menge des in die Mischkammer 44 der Ventile 4 eintretenden Rücklaufs 6 ein. Über den Verbraucherausgang 42 der Ventile 4 tritt das in der Temperatur eingestellte Heizmedium über Rohrleitungen in die Verbraucher 2 ein und gibt Wärme an die einzelnen Räume ab. Aus den Verbrauchern 2 strömt dann der Rücklauf in die Rücklaufsammelleitung 6 und wird mit dem Rücklauf der anderen Verbraucher 2 vermischt. Der nicht in den Ventilen 4 benötigte Rücklauf wird über die Rücklaufsammelleitung 6 der Wärmequelle 1 wieder zugeführt.

Wie in Fig. 2 dargestellt, kann beispielsweise eine Anzahl unterschiedlicher Verbraucher 2 in einem Raum oder unterschiedliche Verbraucher 2 in unterschiedlichen Räumen angeordnet sein. So kann beispielsweise, wie in Fig. 2 dargestellt, eine Fußbodenheizung mit Heizkörpern kombiniert sein und der jeweilige Wärmebedarf bzw. die Temperatur des Heizmediums der einzelnen Verbraucher 2 über die Ventile 4 eingestellt werden. Wird beispielsweise im Heizkörper 2 eine höhere Temperatur des Heizmediums gebraucht, kann die Temperatur des Heizmediums in der Wärmequelle 1 an diesen angepasst werden und ohne Zumischung von in der Rücklaufleitung bzw. Rücklaufsammelleitung 6 strömenden Rücklauf an den Verbraucher 2 weitergeleitet werden. Da Fußbodenheizungen meist eine niedrige Temperatur des Heizmediums brauchen, kann mit derselben Wärmequelle 1 über eine Zumischung eines höheren Anteils des Rücklaufs aus der Rücklaufleitung bzw. Rücklaufsammelleitung 6 die Temperatur des Heizmediums, die zum Verbraucher 2 bzw. der Fußbodenheizung strömt, abgesenkt werden und somit für die Fußbodenheizung ebenfalls die perfekte Temperatur und Wärmemenge eingestellt werden.

Analog wie zuvor für die bevorzugte Ausführungsform des Verfahrens zur Heizung eines Raums, kann ebenfalls die Kühlung eines Raums vorgenommen werden, indem lediglich die Temperatur des Heizmediums in der Wärmequelle 1 nicht angehoben, sondern abgesenkt wird.

## Patentansprüche

1. Verfahren zum Kühlen oder Heizen von Räumen, wobei
- ein Heizmedium über eine Wärmequelle (1) temperiert und als temperiertes Heizmedium über zumindest eine Rohrleitung, insbesondere eine Vorlaufleitung (3), einer Mehrzahl von Verbrauchern (2) und/oder Verbrauchergruppen zugeführt wird, wobei Wärme vom Heizmedium in den Verbrauchern (2) und/oder den Verbrauchergruppen an eine Mehrzahl zu heizender Räume abgegeben oder von einer Mehrzahl zu kühlender Räume aufgenommen wird,
- wobei in jedem Raum zumindest ein Verbraucher (2) und/oder eine Verbrauchergruppe angeordnet ist,
- wobei eine Rohrleitung, insbesondere eine Rücklaufleitung (5), vorgesehen ist, in der das Heizmedium von den Verbrauchern (2) und/oder Verbrauchergruppen der Wärmequelle (1) wieder zugeführt wird,
- wobei in der Rohrleitung von der Wärmequelle (1) zum jeweiligen Verbraucher (2) und/oder zur jeweiligen Verbrauchergruppe ein Ventil (4) angeordnet ist, mit dem die Menge des Heizmediums, das von der Wärmequelle (1) zum jeweiligen Verbraucher (2) und/oder zur jeweiligen Verbrauchergruppe strömt, einstellbar ist,
**dadurch gekennzeichnet, dass** das von den Verbrauchern (2) und/oder Verbrauchergruppen zurückströmende Heizmedium in einer gemeinsamen Rücklaufsammelleitung (6) gesammelt und vermischt wird,
- wobei jedem Ventil (4) ein Anteil des vom Verbraucher (2) zur Wärmequelle (1) zurückströmenden Heizmediums aus der Rücklaufsammelleitung (6) zugeführt und mit dem von der Wärmequelle (1) zum Verbraucher (2) und/oder der Verbrauchergruppe strömenden Heizmedium vermischt wird, sodass die Temperatur des dem jeweiligen Verbraucher (2) und/oder der jeweiligen Verbrauchergruppe zugeführten Heizmediums vorgegeben und eingestellt wird.

2. Verfahren nach Anspruch 1, **dadurch gekennzeichnet, dass** in den zu heizenden oder zu kühlenden Räumen jeweils zumindest ein Sensor, insbesondere ein Thermostat (9), angeordnet ist, mit dem der Wärmebedarf des Verbrauchers (2) und/oder der Verbrauchergruppe und/oder des Raumes ermittelt wird, und wobei die Temperatur des aus dem jeweiligen Ventil (4) dem Verbraucher (2) und oder der Verbrauchergruppe zugeführten Heizmediums anhand des Wärmebedarfs des jeweiligen Verbrauchers (2) und/oder der Verbrauchergruppe und/oder des Raums eingestellt wird.

3. Verfahren nach einem der vorangehenden Ansprüche, **dadurch gekennzeichnet, dass** der Wärmebedarf des Verbrauchers (2) und/oder der Verbrauchergruppe des zu heizenden oder zu kühlenden Raumes unter Heranziehung von Umgebungsdaten, der Außentemperatur, der Sonneneinstrahlung und/oder einer Wetterprognose ermittelt wird, wobei zur Ermittlung des Wärmebedarfs insbesondere eine künstliche Intelligenz oder ein Machine-Learning herangezogen wird.

4. Verfahren nach einem der vorangehenden Ansprüche, **dadurch gekennzeichnet, dass** die Temperatur des Heizmediums in der Wärmequelle (1) anhand der höchsten oder niedrigsten benötigten Temperatur angepasst wird, die in dem Verbraucher (2) und/oder der Verbrauchergruppe mit dem größten Wärmebedarf oder größten Kühlbedarf benötigt wird.

5. Anordnung zum Temperieren von Räumen, insbesondere zur Durchführung eines Verfahrens nach einem der Ansprüche 1 bis 4, umfassend:
- eine Wärmequelle (1), in der ein Heizmedium erwärmbar oder abkühlbar ist,
- eine Mehrzahl von Verbrauchern (2) und/oder Verbrauchergruppen, in denen Wärme von dem Heizmedium an den zu beheizenden Raum abgebbar oder in denen Wärme von dem zu kühlenden Raum aufnehmbar ist,
- eine Anzahl von Rohrleitungen, insbesondere Vorlaufleitungen (3) und Rücklaufleitungen (5), die die Wärmequelle (1) mit den Verbrauchern (2) und/oder Verbrauchergruppen verbinden, wobei das Heizmedium, insbesondere als Vorlauf, von der Wärmequelle (1) zu den Verbrauchern (2) und/oder den Verbrauchergruppen über die Rohrleitungen, insbesondere die Vorlaufleitungen (3), transportierbar ist und das Heizmedium, insbesondere als Rücklauf, von den Verbrauchern (2) und/oder Verbrauchergruppen zur Wärmequelle (1) über die Rohrleitungen, insbesondere die Rücklaufleitungen (5), transportierbar ist,
- wobei je Verbraucher (2) und/oder Verbrauchergruppe zumindest ein Ventil (4) in den Rohrleitungen von der Wärmequelle (1) zum Verbraucher (2) und/oder den Verbrauchergruppen angeordnet ist, wobei jedes Ventil (4) einen Vorlaufanschluss (41) und einen Verbraucherausgang (42) aufweist, wobei der Vorlaufanschluss (41) mit der Wärmequelle (1) über die Rohrleitungen, insbesondere die Vorlaufleitung (3), und der Verbraucherausgang (42) mit dem Eingang des Verbrauchers (2) und/oder der Verbrauchergruppe über die Rohrleitungen verbunden ist, wobei jedes Ventil (4) ein Stellmittel (49) aufweist, mit dem der Durchfluss des Heizmediums von der Wärmequelle (1) zum Verbraucher (2) und/oder der Verbrauchergruppe mittels des Ventils (4) regelbar ist,
**dadurch gekennzeichnet, dass** die Anordnung eine Rücklaufsammelleitung (6) aufweist in der alle Rohrleitungen, insbesondere alle Rücklaufleitungen (5) die von den Verbrauchern (2) und/oder Verbrauchergruppen zur Wärmequelle (1) zurückführen münden und das zurückströmende Heizmedium in der gemeinsamen Rücklaufsammelleitung (6) sammelbar und untereinander vermischbar ist, wobei jedes Ventil (4) einen Rücklaufeingang (43) aufweist, wobei der Rücklaufeingang (43) mit der Rücklaufsammelleitung (6) fluidübertragend verbunden ist,
und dass jedes Ventil (4) eine Mischkammer (44) aufweist, wobei die Mischkammer (44) derart mit dem Vorlaufanschluss (41) und dem Rücklaufeingang (43) fluidübertragend verbunden ist, wobei das von der Wärmequelle (1) strömende Heizmedium, insbesondere der Vorlauf, mit dem über den Rücklaufeingang (43) in das Ventil (4) eintretende Heizmedium, insbesondere dem Rücklauf, mischbar ist und über den Verbraucherausgang (42) dem jeweiligen Verbraucher (2) und/oder der jeweiligen Verbrauchergruppe zuführbar ist.

6. Anordnung nach Anspruch 5, **dadurch gekennzeichnet, dass** jede Mischkammer (44) zumindest eine Rücklaufeintrittsöffnung (45) aufweist, über die das Heizmedium aus der Rücklaufsammelleitung (6) in die Mischkammer (44) einleitbar ist,
und/oder wobei die Mischkammer (44) zumindest eine Vorlauföffnung (46) aufweist, die mit dem Vorlaufanschluss (41) des Ventils (4) fluidübertragend verbunden ist und über die das Heizmedium, insbesondere der Vorlauf, in die Mischkammer (44) einleitbar ist,
und dass der Querschnitt der Rücklaufeintrittsöffnung (45) und/oder der Vorlauföffnung (46) über ein Regelmittel gekoppelt und/oder unabhängig voneinander einstellbar ausgebildet ist, sodass die Temperatur des über den Verbraucherausgang (42) des Ventils (4) zum jeweiligen Verbraucher (2) und/oder Verbrauchergruppe strömenden Heizmediums einstellbar ist.

7. Anordnung nach einem der Ansprüche 5 oder 6, **dadurch gekennzeichnet, dass** die Anordnung zumindest einen Sensor, insbesondere einen Thermostat (9), je zu heizendem Raum aufweist, mit dem der Wärmebedarf des jeweiligen zu beheizenden Raumes ermittelbar ist,
- wobei die Anordnung eine Steuereinheit (12) aufweist, wobei die Steuereinheit (12) derart ausgebildet ist, dass die Messwerte der Sensoren der Steuereinheit (12) zuführbar sind, und wobei die Temperatur des jedem Verbraucher (2) und/oder jeder Verbrauchergruppe zugeführten Heizmediums individuell über das dem jeweiligen Verbraucher (2) und/oder jeweiligen Verbrauchergruppe zugeordnete Ventils (4) einstellbar ist.

8. Anordnung nach einem der Ansprüche 5 bis 7, **dadurch gekennzeichnet, dass** zwischen der Rücklaufsammelleitung (6) und dem Ventil (4) eine Pumpe (8) angeordnet ist, die den Druck des Heizmediums in der von den Verbrauchern (2) und/oder den Verbrauchergruppen in die Rücklaufsammelleitung (6) führenden Rohrleitungen auf den Druck des von der Wärmequelle (1) strömenden Heizmediums anhebt.

9. Anordnung nach einem der Ansprüche 5 bis 8, **dadurch gekennzeichnet, dass** die Ventile (4) der einzelnen Verbraucher (2) und/oder Verbrauchergruppen in einem Mehrfachventil vereint sind.

10. Ventil (4) zur Einstellung der Temperatur eines Heizmediums, insbesondere zur Verwendung in einer Anordnung nach einem der Ansprüche 5 bis 9, wobei das Ventil (4) zumindest einen Vorlaufanschluss (41) und einen Verbraucherausgang (42) aufweist, wobei der Vorlaufanschluss (41) mit einer Wärmequelle (1) über die Rohrleitungen, insbesondere eine Vorlaufleitung (3), und der Verbraucherausgang (42) mit dem Eingang eines Verbrauchers (2) und/oder einer Verbrauchergruppe über Rohrleitungen verbindbar ist,
wobei jedes Ventil (4) ein Stellmittel (47) aufweist, mit dem der Durchfluss aus dem Verbraucherausgang (42) regelbar ist,
**dadurch gekennzeichnet, dass** das Ventil (4) eine Mischkammer (44) aufweist, wobei die Mischkammer (44) derart mit dem Vorlaufanschluss (41) und dem Rücklaufeingang (43) fluidübertragend verbunden ist, dass das in den Vorlaufanschluss (41) einströmende Heizmedium, insbesondere der Vorlauf, mit dem über den Rücklaufeingang (43) in das Ventil (4) eintretende Heizmedium, insbesondere dem Rücklauf, mischbar ist und über den Verbraucherausgang (42) dem jeweiligen Verbraucher (2) und/oder der jeweiligen Verbrauchergruppe zuführbar ist.

11. Ventil (4) nach Anspruch 10, **dadurch gekennzeichnet, dass** die Mischkammer (44) zumindest eine Rücklaufeintrittsöffnung (45) aufweist, die mit dem Rücklaufeingang (43) fluidübertragend verbunden ist,
wobei die Mischkammer (44) zumindest eine Vorlauföffnung (46) aufweist, die mit dem Vorlaufanschluss (41) des Ventils (4) fluidübertragend verbunden ist,
und dass der Querschnitt der Rücklaufeintrittsöffnung (45) und/oder der Vorlauföffnung (46) über ein Regelmittel gekoppelt und/oder unabhängig voneinander einstellbar ausgebildet ist, sodass die Temperatur des über den Verbraucherausgang (42) des Ventils (4) zum jeweiligen Verbraucher (2) und/oder Verbrauchergruppe strömenden Heizmediums einstellbar ist.

12. Ventil nach Anspruch 11, **dadurch gekennzeichnet, dass** die Mischkammer (44) zylindrisch ausgebildet ist, wobei das Regelmittel als Stellhülse (13) ausgebildet ist, die in der Mischkammer (44) an deren Innenumfang anliegend verstellbar angeordnet und ausgebildet ist, wobei die Stellhülse (13) die Rücklaufeintrittsöffnung (45) und/oder der Vorlauföffnung (46) zumindest teilweise abdeckt, wobei die Stellhülse (13) zumindest zwei Öffnungen (48) aufweist, wobei die Öffnungen (48) derart im Umfang der Stellhülse (13) im Bereich der die Rücklaufeintrittsöffnung (45) und/oder der Vorlauföffnung (46) der Mischkammer (44) angeordnet sind, dass bei Verstellung der Stellhülse (13) in der Mischkammer (44), insbesondere in der Achse der Mischkammer (44), die Überdeckung der Öffnungen (48) mit der Rücklaufeintrittsöffnung (45) und/oder der Vorlauföffnung (46) der Mischkammer (44) veränderbar ist, sodass die Menge des aus der Rücklaufeintrittsöffnung (45) und/oder der Vorlauföffnung (46) in die Mischkammer(44) eintretende Heizmedium veränderbar ist.

13. Ventil (4) nach einem der Ansprüche 10 bis 12, **dadurch gekennzeichnet, dass** das Ventil (4) eine Mehrzahl von Mischkammern (44) umfasst, wobei je Mischkammer (44) ein Verbraucherausgang (42) vorgesehen ist sodass die Temperatur des aus dem Verbraucherausgang (42) einem diesen nachgeordneten Verbraucher (2) oder Verbrauchergruppe einstellbar ist.
